# EUROPÄISCHE PATENTSCHRIFT

(11) **EP 1 145 575 B1**
(45) Veröffentlichungstag und Bekanntmachung des Hinweises auf die Patenterteilung: **25.01.2006**
(21) Anmeldenummer: 99963229.2
(22) Anmeldetag: 12.11.1999
(51) Int. Cl.: H04Q 7/22

(54) **VERFAHREN UND EINRICHTUNG ZUR VERBESSERUNG DER AUDIOQUALITÄT IN EINEM MOBILFUNKNETZ**
METHOD AND DEVICE FOR IMPROVING AUDIO QUALITY IN A MOBILE RADIO NETWORK
PROCEDE ET DISPOSITIF POUR L'AMELIORATION DE LA QUALITE SONORE DANS UN RESEAU RADIO-MOBILE

(30) Priorität: 12.11.1998 DE 19852091
(43) Veröffentlichungstag der Anmeldung: 17.10.2001
(73) Patentinhaber: T-Mobile Deutschland GmbH, 53227 Bonn (DE)
(72) Erfinder: BUDNIK, Bernhard, D-53225 Bonn (DE)
(74) Vertreter: Riebling, Peter
(86) Internationale Anmeldenummer: PCT/DE1999/003616
(87) Internationale Veröffentlichungsnummer: WO 2000/030277

(56) Entgegenhaltungen:
- EP-A- 0 685 972
- EP-A- 0 705 016

## Beschreibung

Die Erfindung betrifft ein Verfahren und eine Einrichtung zur Verbesserung der Audioqualität in einem Mobilfunknetz.

Mobiffunknetze, wie z.B. das GSM-Mobilfunknetz, verhalten sich - abgesehen von einer vorgegebenen Bandbreitenbegrenzung und dem verwendeten Sprachcodec - klangbildneutral.

Das vom Mobilfunkteilnehmer empfundene Klangbild wird in erster Linie durch die verwendeten Mobilfunkendgeräte festgelegt, wobei jeder Gerätehersteller seinem Gerät ein etwas anderes Klangbild "einprägt". Die heute verfügbaren Endgerätemodelle weisen zum Teil grosse Klangunterschiede auf, die von den Gerätebenutzem als unterschiedlich angenehm bzw. weniger angenehm empfunden werden.

In Meinungsumfragen wurde z.B. ermittelt, daß GSM1800 Netze ein besseres Klangbild haben als GSM900 Netze. Da dies technisch nicht nachvollziehbar ist, liegt die Vermutung nahe, daß dies an den Geräteeigenschaften liegt. D.h. es sind nicht die GSM1800 Netze die besser klingen, sondern es sind die in diesem Netz verwendeten Endgeräte.

Ein Verfahren zur teilnehmerindwiduellen Verbesserung der Klangqualität bei Telefonen ist in der EP-A-0 705 016 offenbart. Vor oder während einer Gesprächsverbindung kann die Klangqualität in der aktuellen Gesprächsverbindung nach Vorgaben des Teilnehmers durch entsprechende Einrichtungen im Kommunikationsnetz verbessert werden. Hierzu gibt der Teilnehmer die gewünschten Vorgaben manuell über sein Telefon ein, oder seine Identität wird automatisch durch das Kommunikationsnetz ermittelt, wobei anhand der ermittelten Identität zuvor festgelegte Vorgaben des Teilnehmers aus einer Datenbank abgerufen werden. Eine endgeräteabhängige Verbesserung der Klangqualität ist nicht vorgesehen.

Die Aufgabe der Erfindung liegt nun darin, ein Verfahren und eine Einrichtung zu schaffen, mit welchen eine endgeräteabhängige Verbesserung der Audioquaütät in Mobilfunknetzen erzielt werden kann.

Diese Aufgabe wird durch die kennzeichnenden Merkmale des Patentanspruchs 1 gelöst.

Die Erfindung beruht darauf, daß ein Entzerrer in den einer Kommunikationsverbindung zugeordneten Audiopfad geschaltet wird, der in Abhängigkeit der an der Verbindung beteiligten Gerätetypen eine Beeinflussung der Audioqualität im Audiopfad vornimmt, indem das Klangbild im Audiopfad verändert wird.

Dadurch wird der Vorteil erreicht, daß sich eventuelle Mängel der Audioqualität einzelner Endgerätemodelle netzseitig, d.h. vom Teilnehmer unbemerkt, ausgleichen lassen.
Nicht mehr der Endgerätehersteller, sondern der Netzbetreiber legt nun die Charakteristika des Klangbildes seines Netzes fest, indem er die Charakteristika des Klangbild der Endgeräte für jedes Endgerätemodell festlegt.

Dies resultiert in einem unmittelbaren Qualitätsvorsprung eines mit der Erfindung ausgestatteten Netzes. Ein in einem herkömmlichen Netz minderwertig klingendes Endgerät bekommt in einem Netz, das die Erfindung nutzt, eine gute Klangqualität. Dies projiziert der Teilnehmer unmittelbar auf die Netzqualität, wie die weiter oben angegebene Umfragen gezeigt haben.

In Abhängigkeit des Endgerätes wird ein in den Audiopfad geschalteter Entzerrer konfiguriert, so, daß er z.B. bei einem besonders dumpf klingenden Gerät die Höhen anhebt.
In einer Weiterbildung der Erfindung ist vorgesehen, daß die Beeinflussung der Audioquaütät in Verbindungsrichtung vom rufenden zum angerufenen und vom angerufenen zum rufenden Teilnehmer unterschiedlich ist.

Die Mobilvermittlungsstelle (MSC) bestimmt durch Abfrage der Mobilgerätekennung (IMEI: Intemational Mobile Equipment Identity) das Gerätemodell. Diese Abfrage der IMEI wird in der Regel immer bereits bei der Authentisierungsprozedur zwischen Mobilstation und Mobilfunknetz durchgeführt, wobei das Mobilfunknetz nur Geräte mit zugelassener IMEI akzeptiert.
Der Mobilvermittlungsstelle ist der einem Gespräch zugeordnete Audiopfad bekannt, so daß dieser durch Ansteuerung eines dem Audiopfad zugeordneten Entzerrers direkt beeinflusst werden kann.

Zu jedem Gerätetyp sind die entsprechenden Klangparameter in einem Datenspeicher der Mobilvermittlungsstelle abgespeichert und jederzeit abrufbar. Anhand der zu einem bestimmten Gerätetyp abgespeicherten Klangparameter wird der Entzerrer des zugehörigen Audiopfads konfiguriert. Die Klangparameter können auch vorteilhaft im Entzerrer selbst vorgehalten werden.

Das Steuersignal zur Ansteuerung des Entzerrers wird vorzugsweise von der Mobilvermittlungsstelle bereitgestellt, kann aber auch von einer beliebigen anderen Instanz des Mobilfunknetzes bereitgestellt werden. Es ist auch denkbar, mittels einer separaten Trace-Einrichtung die Signalisierung auf den verschiedenen Schnittstellen des Mobilfunksystems zu verfolgen und mit den daraus angeleiteten Daten den Entzerrer anzusteuern.

In einer bevorzugten Ausführungsform der Erfindung ist der Entzerrer in der Nähe der Transcodiereinrichtung (TRAU: Transcoder/Rate Adaption Unit) angeordnet und kann vorzugsweise als Teil der Transcodiereinrichtung eingerichtet sein. Die Transcodiereinrichtung TRAU konvertiert den von der Basisstationssteuerung BSC kommenden 16 kbit/s-Subkanal nach dem PCM-A-Gesetz in ein 64 kbit/s-Signal, das in der Mobilvermittlungsstelle (MSC) weiterverarbeitet wird.

Gemäss einer anderen Ausführungsform ist der Entzerrer als separate Einheit der Transcodiereinrichtung vor oder nachgeschaltet. Der Entzerrer kann auch in der Mobilvermittlungsstelle angeordnet sein. Wichtig ist nur, daß der Entzerrer an einer vom tnstallationsaufwand her gesehen günstigen Stelle in den Audiopfad eingeschaltet ist. Eine bevorzugte Stelle ist z.B. dort, wo eine Vielzahl von Audiokanälen zusammenlaufen, also z.B. in der TRAU oder der MSC. Der Entzerrer umfasst vorteilhaft nicht nur eine Entzerrereinheit, sondern eine Vielzahl von Entzerrereinheiten, die je einem Audiopfad oder Audiokanal zugeordnet werden können.

In einer Weiterbildung der Erfindung ist es vorgesehen, das Steuersignal für den Entzerrer nicht nur in Abhängigkeit von der Mobilgerätekennung (IMEI) zu erzeugen, sondern auch in Abhängigkeit von teilnehmerindividuellen Merkmalen. Der Entzerrer könnte so z.B. für Privatteilnehmer, Geschäftsteilnehmer, Gastteilnehmer, Schwerhörige, etc. unterschiedlich eingestellt werden.

Schliesslich besteht auch die Möglichkeit, den Entzerrer zur Sprachverschleierung/verschlüsselung einzusetzen.

Nachfolgend wird die Erfindung anhand eines Ausführungsbeispiels unter Bezugnahme auf eine Zeichnungsfigur näher beschrieben. Dabei gehen aus der Zeichnung weitere Merkmale und Vorteile der Erfindung hervor.

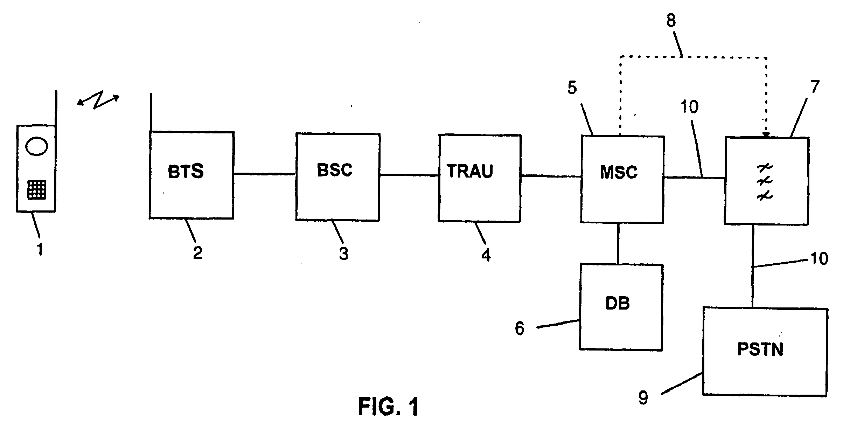

Figur 1 zeigt am Beispiel eines GSM-Mobilfunknetzes die wesentlichen, an einer Kommunikationsverbindung zwischen einem Mobilfunkteilnehmer und einem Teilnehmer eines öffentlichen Festnetzes beteiligten Einrichtungen.

Der Mobilfunkteilnehmer möchte mittels eines Mobilfunkendgeräts 1 eine Sprechverbindung zu einem Teilnehmer eines öffentlichen Festnetzes 9 herstellen und bucht sich über eine Basisstation 2 im Mobilfiunknetz ein. Der Verbindungsaufbau erfolgt in bekannter Weise zunächst über die Basisstation 2, die Basisstationssteuerung 3 zur Mobilvermittlungsstelle 5, die den weiteren Verbindungsaufbau zum öffentlichen Festnetz 9 übemimmt. Zwischen die Basisstationssteuerung 3 und die Mobilvermittlungsstelle 5 ist eine Transcodiereinrichtung 4 geschaltet, die z.B. innerhalb der Mobilvermittlungsstelle 5 angeordnet sein kann.

Erfindungsgemäss ist nun in den Audiopfad 10 der Verbindung ein Entzerrer 7 geschaltet, der vorzugsweise auch im Bereich der Mobilvermittlungsstelle 5 angeordnet ist. Der Entzerrer 7 wird von der Mobilvermittlungsstelle 5 über ein Steuersignal 8 angesteuert. Die Mobilvermittlungsstelle 5 ermittelt während des Verbindungsaufbaus durch Abfrage der Mobilgerätekennung (IMEI) das vom Mobilfunkteilnehmer benutzte Gerätemodell 1. Die Abfrage der IMEI ist bei GSM standardmässig vorgesehen. Zu jedem marktgängigen Gerätetyp sind entsprechende Klangparameter in einem Datenspeicher 6 der Mobilvermittlungsstelle, 5 abgespeichert und jederzeit abrufbar. Anhand der zu einem bestimmten Gerätetyp abgespeicherten Klangparameter wird über das Steuersignal 8 der Entzerrer 7 des der Verbindung zugeordneten Audiopfads konfiguriert. Die Klangparameter können auch vorteilhaft in Entzerrer 7 selbst vorgehalten werden. Der Entzerrer 7 beeinflusst nun entsprechend den Vorgaben das Klangbild im Audiopfad 10 und verbessert, entzerrt und/oder vergleichmässigt das Klangbild.

## Patentansprüche

1. Verfahren zur Verbesserung der Audioqualität in einem Mobilfunknetz, bei dem ein Entzerrer (7) in den einer Kommunikationsverbindung zugeordneten Audiopfad (10) geschattet wird, der in Abhängigkeit des/der an der Verbindung beteiligten Endgerätetyp(en) eine Beeinflussung der Audioqualität im Audiopfad (10) vornimmt, indem das Klangbild im Audiopfad verändert wird.

2. Verfahren nach Anspruch 1, **dadurch gekennzeichnet, daß** die Beeinflussung der Audioqualität in Verbindungsrichtung vom rufenden zum angerufenen und vom angerufenen zum rufenden Teilnehmer unterschiedlich ist.

3. Verfahren nach Anspruch 1 oder 2, **dadurch gekennzeichnet, daß** die Basisstationssteuerung (3) bzw. die Mobilvermittlungsstelle (5) durch Abfrage der Mobilgerätekennung den/die Endgerätetyp(en) (1) bestimmt und dem bestimmten Endgerätetyp entsprechende vorgegebene Parameter zuordnet, die zur Einstellung des Entzerrers dienen.

4. Verfahren nach einem der Ansprüche 1-3, **dadurch gekennzeichnet, daß** die Parameter für alle marktgängigen Mobilfunkendgeräte (1) in einem Datenspeicher (6) abgespeichert sind und je nach Bedarf abgerufen werden können.

5. Verfahren nach einem der Ansprüche 1-4, **dadurch gekennzeichnet, daß** aufgrund der zu einem Endgerätetyp (1) abgespeicherten Parametern der Entzerrer (7) des zugehörigen Audiopfads konfiguriert wird.

6. Verfahren nach einem der Ansprüche 1-5, **dadurch gekennzeichnet, daß** die Parameter über ein von der Mobilvermittlungsstelle (5) oder eine andere Netzkomponente bereitgestelltes Steuersignal (8) an den Entzerrer (7) übertragen werden.

7. Verfahren nach einem der Ansprüche 1-6, **dadurch gekennzeichnet, daß** der Entzerrer (7) im Bereich der Mobilvermittlungsstelle (5) oder Basisstationssteuerung (3) in den Audiopfad (10) geschaltet ist.

8. Verfahren nach einem der Ansprüche 1-6, **dadurch gekennzeichnet, daß** der Entzerrer (7) im Bereich der Transcodiereinrichtung (4) in den Audiopfad (10) geschaltet ist.

9. Verfahren nach einem der Ansprüche 1-8, **dadurch gekennzeichnet, daß** der Entzerrer in Abhängigkeit von teilnehmerindividuellen Merkmalen eingestellt wird.

10. Einrichtung zur Durchführung des Verfahrens gemäss den Ansprüchen 1-9, umfassend einen in den einer Kommunikationsverbindung zugeordneten Audiopfad geschalteten Entzerrer (7).

11. Einrichtung nach Anspruch 10, **dadurch gekennzeichnet, daß** der Entzerrer (7) in der Basisstationssteuerung (3) angeordnet ist.

12. Einrichtung nach Anspruch 10, **dadurch gekennzeichnet, daß** der Entzerrer (7) in der Mobilvermittlungsstelle (5) angeordnet ist

13. Einrichtung nach einem der Ansprüche 10-12, **dadurch gekennzeichnet, daß** der Entzerrer (7) Teil der Transcodiereinrichtung (4) ist.

14. Einrichtung nach einem der Ansprüche 10-12, **dadurch gekennzeichnet, daß** der Entzerrer (7) der Transcodiereinrichtung (4) vor bzw. nachgeschaltet ist.

15. Einrichtung nach einem der Ansprüche 10-14, **dadurch gekennzeichnet, daß** der Entzerrer (7) eine Vielzahl von Entzerrereinheiten umfasst, die jeweils einem Audiopfad (10) zugeordnet sind.

## Claims

1. Method for improving the audio quality in a mobile radio network, in which an equaliser (7) is switched into the audio path (10) allocated to a communications call, which exerts an influence on the audio quality in the audio path (10) as a function of the type(s) of terminal equipment involved in the call by changing the sound image in the audio path.

2. Method according to claim 1, **characterised in that** the influence on the audio quality differs in the call direction from the calling to the called and from the called to the calling subscriber.

3. Method according to claim 1 or 2, **characterised in that** the base station control (3) or the mobile-services switching centre (5) determines the type(s) of terminal equipment (1) by interrogating the mobile telephone identifier and allocates to the terminal equipment type determined appropriate preset parameters which serve for setting the equaliser.

4. Method according to one of claims 1 to 3, **characterised in that** the parameters for all mobile radio terminal equipment (1) available on the market are stored in a data memory (6) and can be retrieved according to requirement.

5. Method according to one of claims 1 to 4, **characterised in that** the equaliser (7) of the associated audio path is configured based on the parameters stored for an item of terminal equipment (1).

6. Method according to one cf claims 1 to 5, **characterised in that** the parameters are transmitted to the equaliser (7) via a control signal (8) provided by the mobile-services switching centre (5) or some other network component.

7. Method according to one of claims 1 to 6, **characterised in that** the equaliser (7) is switched into the audio path (10) in the area of the mobile-services switching centre (5) or the base station control (3).

8. Method according to one of claims 1 to 6, **characterised in that** the equaliser (7) is switched into the audio path (10) in the area of the transcoding device (4).

9. Method according to one of claims 1 to 8, **characterised in that** the equaliser is set as a function of subscriber-individual features.

10. Device for carrying out the method according to claims 1 to 9, comprising an equaliser (7) switched into the audio path allocated to a communications call.

11. Device according to claim 10, **characterised in that** the equaliser (7) is arranged in the base station control (3).

12. Device according to claim 10, **characterised in that** the equaliser (7) is arranged in the mobile-services switching centre (5).

13. Device according to one of claims 10 to 12, **characterised in that** the equaliser (7) is part of the transcoding device (4).

14. Device according to one of claims 10 to 12, **characterised in that** the equaliser (7) is switched upstream or downstream the transcoding device (4).

15. Device according to one of claims 10 to 14, **characterised in that** the equaliser (7) comprises a multiplicity of equalising units, each allocated to an audio path (10).

## Revendications

1. Procédé pour améliorer la qualité sonore dans un réseau radiotéléphonique mobile, selon lequel on monte dans la voie audio (10) associée à une liaison de communication un correcteur (7) qui influe sur la qualité sonore sur la voie audio (10) en fonction du ou des types de terminal participant à la liaison, en modifiant le son sur ladite voie audio.

2. Procédé selon la revendication 1, **caractérisé en ce que** l'influence exercée sur la qualité sonore est différente dans le sens de liaison de l'appelant vers l'appelé et de l'appelé vers l'appelant.

3. Procédé selon la revendication 1 ou 2, **caractérisé en ce que** la commande de station de base (3) ou le centre de commutation mobile (5) définit le ou les types de terminal (1) en interrogeant l'identification de l'appareil mobile et affecte au type de terminal défini des paramètres prédéfinis correspondants qui servent à régler le correcteur.

4. Procédé selon l'une des revendications 1 à 3, **caractérisé en ce que** les paramètres pour tous les terminaux mobiles (1) courants sur le marché sont mis en mémoire dans une mémoire de données (6) et peuvent être interrogés suivant les besoins.

5. Procédé selon l'une des revendications 1 à 4, **caractérisé en ce que** le correcteur (7) de la voie audio correspondante est configuré à partir des paramètres mis en mémoire pour un type de terminal (1).

6. Procédé selon l'une des revendications 1 à 5, **caractérisé en ce que** les paramètres sont transmis au correcteur (7) par l'intermédiaire d'un signal de commande (8) fourni par le centre de commutation mobile (5) ou un autre composant du réseau.

7. Procédé selon l'une des revendications 1 à 6, **caractérisé en ce que** le correcteur (7) est monté dans la voie audio (10) dans la zone du centre de commutation mobile (5) ou de la commande de station de base (3).

8. Procédé selon l'une des revendications 1 à 6, **caractérisé en ce que** le correcteur (7) est monté dans la voie audio (10) dans la zone du transcodeur (4).

9. Procédé selon l'une des revendications 1 à 8, **caractérisé en ce que** le correcteur est réglé en fonction de caractéristiques individuelles des abonnés.

10. Dispositif pour mettre en oeuvre le procédé selon les revendications 1 à 9, comprenant un correcteur (7) qui est monté dans la voie audio affectée à une liaison de communication.

11. Dispositif selon la revendication 10, **caractérisé en ce que** le correcteur (7) est disposé dans la commande de station de base (3).

12. Dispositif selon la revendication 10, **caractérisé en ce que** le correcteur (7) est disposé dans le centre de commutation mobile (5).

13. Dispositif selon l'une des revendications 10 à 12, **caractérisé en ce que** le correcteur (7) fait partie du transcodeur (4).

14. Dispositif selon l'une des revendications 10 à 12, **caractérisé en ce que** le correcteur (7) est monté en amont ou en aval du transcodeur (4).

15. Dispositif selon l'une des revendications 10 à 14, **caractérisé en ce que** le correcteur (7) comprend une multiplicité d'unités de correction qui sont affectées chacune à une voie audio (10).
